Europäisches Patentamt

European Patent Office

Office européen des brevets

(19)

(11) Veröffentlichungsnummer: **0 046 198**
**B1**

(12) **EUROPÄISCHE PATENTSCHRIFT**

(45) Veröffentlichungstag der Patentschrift:
**20.11.86**

(21) Anmeldenummer: **81105616.7**

(22) Anmeldetag: **17.07.81**

(51) Int. Cl.⁴: **G 09 B 29/10,** G 01 C 21/04,
G 01 S 5/00, G 06 F 15/50

(54) **Positionsanzeigegerät.**

(30) Priorität: **19.08.80 DE 3031258**

(43) Veröffentlichungstag der Anmeldung:
**24.02.82 Patentblatt 82/8**

(45) Bekanntmachung des Hinweises auf die Patenterteilung:
**20.11.86 Patentblatt 86/47**

(84) Benannte Vertragsstaaten:
**DE FR GB IT**

(56) Entgegenhaltungen:
**DE - A - 2 551 771**
**DE - A - 2 713 406**
**DE - A - 2 805 363**
**DE - B - 1 548 399**
**DE - B - 1 773 317**
**US - A - 4 139 889**

(73) Patentinhaber: **Universität Stuttgart Institut für Flugnavigation, Keppler Strasse 11, D-7000 Stuttgart 1 (DE)**

(72) Erfinder: **Wildermuth, Eberhard, Prof.Dr.-Ing., Jahnstrasse 72, D-7022 Leinfelden-Echterdingen 3 (DE)**
Erfinder: **Jansen, Dirk, Dr.-Ing., Barbelgängle 27, D-7770 Überlingen/Bodensee (DE)**
Erfinder: **Burkhardt, Rudolf, Dipl.-Ing., Am Bergheimer Hof 41, D-7000 Stuttgart 31 (DE)**
Erfinder: **Merz, Joachim, Ing. grad., Schenkenbergstrasse 24, D-7300 Esslingen-Mettingen (DE)**

(74) Vertreter: **Weisse, Jürgen, Dipl.-Phys. et al, Patentanwälte Dipl.-Phys. Jürgen Weisse Dipl.-Chem. Dr. Rudolf Wolgast Bökenbusch 41 Postfach 11 03 86, D-5620 Velbert 11 Langenberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Positionsanzeigegerät zur Lichtpunktanzeige der Position von Fahrzeugen, insbesondere von Flugzeugen oder Hubschraubern, auf einer Karte, enthaltend eine ebene Kartenaufnahme zur Aufnahme und Halterung von Kartenblättern in definierter Lage, einen unterhalb der Kartenaufnahme angeordneten, durch Stellmittel in zwei Koordinaten steuerbaren Lichtsender zur Erzeugung eines Lichtpunktes auf dem Kartenblatt, einen Mikrokomputer, auf den die Gitterkoordinaten der Fahrzeugposition von einem Navigationsrechner aufschaltbar sind und durch den die Stellmittel des Lichtsenders steuerbar sind, einen Speicher zum Speichern von Kartendaten, der mit dem Mikrokomputer zusammenwirkt, und Anzeigemittel, welche mit dem Mikrokomputer verbunden sind und durch welche das für die jeweiligen Gitterkoordinaten erforderliche Kartenblatt oder Kartenfeld angezeigt wird.

Es sind Navigationsgeräte für Flugzeuge bekannt, die laufend die Position des Flugzeugs in einem UTM-Gitterkoordinatensystem liefern. Ein solches Navigationsgerät kann beispielsweise eine Dopplerradaranlage enthalten, welche laufend die Geschwindigkeit des Flugzeugs über Grund misst. Aus dieser Geschwindigkeit, dem von der Kompassanlage gelieferten Kurs und der Flugzeit werden in einem Navigationsrechner fortlaufend die zum zurückgelegten Flugweg gehörenden Wegkomponenten berechnet und daraus kontinuierlich die Gitterkoordinaten der Flugzeugposition gebildet. Die dabei erhaltene digitale Positionsanzeige ist unanschaulich und müsste jeweils auf eine Karte übertragen werden. Hierdurch würde der Pilot in unerwünschter Weise beansprucht und abgelenkt.

Aus diesem Grund werden die Gitterkoordinaten der Flugzeugposition auf ein Positionsanzeigegerät gegeben. Ein solches Positionsanzeigegerät enthält eine ebene Kartenaufnahme zur Aufnahme und Halterung von Kartenblättern in definierter Lage. Es kann sich dabei um Kartenblätter handeln, die aus einer grösseren Karte längs UTM-Gitterlinie ausgeschnitten und in einer Kartentasche gehaltert sind, die dann in definierter Lage auf die Kartenaufnahme aufgelegt wird. Es kann sich aber auch um Originalkarten handeln, die mit definierten Kartenfeldern auf der Kartenaufnahme gehalten werden. Unterhalb der Kartenaufnahme ist ein Lichtsender angeordnet, der durch Stellmittel in zwei Koordinaten steuerbar ist und einen Lichtpunkt auf dem Kartenblatt erzeugt. Ein Mikrokomputer erhält die Gitterkoordinaten der Flugzeugposition von einem Navigationsrechner. Durch den Mikrokomputer sind die Stellmittel des Lichtsenders so steuerbar, dass der von dem Lichtsender auf der Karte erzeugte Lichtfleck eine Lichtpunktanzeige der Position des Flugzeugs oder Hubschraubers liefert. Um sicherzustellen, dass jeweils die richtige Karte auf die Kartenaufnahme aufgelegt ist, ist ein Speicher zum Speichern von Kartendaten vorgesehen, der mit dem Mikrokomputer zusammenwirkt. Mit dem Mikrokomputer sind Anzeigemittel verbunden, durch welche das für die jeweiligen Gitterkoordinaten erforderliche Kartenblatt oder Kartenfeld angezeigt wird.

Der Pilot hat dann im Normalfall einen Satz Karten vorbereitet, die mit einem dem betreffenden Kartenblatt zugeordneten Kennzeichen, also z.B. einer Nummer, in dem Speicher gespeichert werden. Der Mikrokomputer stellt fest, ob die von dem Navigationsrechner gelieferte Flugzeugposition auf einem der Kartenblätter liegt, und in diesem Falle werden Nummer und die Daten des betreffenden Kartenblattes durch die Anzeigemittel angezeigt. Der Pilot braucht somit nur das jeweils angezeigte Kartenblatt herauszunehmen und in fester Lage auf die Kartenaufnahme aufzulegen, um sicher zu sein, dass die Flugzeugposition auf der richtigen Karte durch den von dem Lichtsender erzeugten Lichtpunkt richtig angezeigt wird.

Durch die DE-B-1 187 023 ist ein Positionsanzeigegerät bekannt, bei welchem mittels einer Reibradanordnung eine die Bewegung eines Fahrzeugs wiedergebende zweidimensionale Stellbewegung eines Ausgangsgliedes erzeugt wird. Diese Stellbewegung wird auf eine Anzeigevorrichtung übertragen, welche sich entsprechend dieser Stellbewegung relativ zu einem in einem Sichtfeld angeordneten Kartenblatt bewegt. Wenn der Rand eines Kartenblattes erreicht wird, wird ein Randsignal gegeben. Dieses Randsignal bewirkt einmal eine mechanische Verschiebung des Ausgangsgliedes der Reibradanordnung um eine z.B. der Breite des Kartenblattes entsprechende Strecke. Zum anderen wird ein Zähler um einen Schritt fortgeschaltet. Diese Fortschaltung des Zählers bewirkt über eine Nachlaufanordnung, dass ein neues Kartenblatt in das Sichtfeld bewegt wird. Bei der dort beschriebenen Ausführung sind die Kartenblätter auf einem Band angeordnet, das über eine Antriebswalze geführt ist.

Bei dieser Anordnung wird kein absolutes Positionssignal erzeugt. Es wird jeweils nur eine Bewegung innerhalb des Bereiches eines Kartenblattes verfolgt. Es ist daher wesentlich, dass die Kartenblätter in genau definierter Weise durch ganze Zahlen kodiert sind. Praktisch setzt die bekannte Anordnung eine in Bandform vorliegende Karte voraus. Es kann also nicht mit irgendeiner beliebigen Karte in irgendeiner beliebigen Gegend der Welt gearbeitet werden.

Die DE-B-1 548 399 zeigt ein Positionsanzeigegerät, bei welchem Kartenblätter in Form von Diapositiven in einem trommelförmigen Magazin angeordnet sind. Jeweils eines dieser Diapositive wird in einen Projektionsstrahlengang gebracht. Die Rahmen der Diapositive sind durch Stifte binär kodiert.

Durch die DE-A-2 805 363 ist schliesslich ein Positionsanzeigegerät für eine Navigationsanlage bekannt, bei dem Positionsangaben von einem Navigationsrechner auf einen Mikrokomputer mit einem Datenspeicher gegeben werden. Der Mikrokomputer steuert in bestimmter Weise Schrittmotoren, die über Spindeln einen Lichtsender steuern. Dieser projiziert ein Lichtkreuz von unten auf ein Kartenblatt, das auf einer Kartenaufnahme gehaltert ist. Die Art der Steuerung und der Wechsel von Kartenblättern ist dort nicht näher beschrieben. Der Erfindung liegt die Aufgabe zugrunde, ein Positionsanzeigegerät der eingangs genannten Art so auszubilden, dass es bei Verwendung beliebiger Kartensätze eine einfache Auswahl der jeweils richtigen Karte gestattet, ohne dass die Gefahr von Fehlern etwa durch falsche Kodierung durch den Benutzer besteht.

Erfindungsgemäss wird diese Aufgabe dadurch gelöst, dass

(a) der Mikrokomputer Mittel enthält, zur Bildung von

$$x' = \frac{x - x_M}{M} + a$$

$$y' = \frac{y - y_M}{M} + b \,,$$

wobei

x, y die von dem Positionsrechner ausgegebenen Gitterkoordinaten der Fahrzeugposition,

$x_M$, $y_M$ die von dem Speicher gelieferten Koordinaten des Kartenmittelpunktes,

M der Kartenmassstab und

a, b die halben Höhen- bzw. Breitenabmessungen des Kartenblatts oder Kartenfelds sind,

(b) der Lichtsender den so in bezug auf eine Kartenecke ermittelten Koordinaten durch die Stellmittel automatisch nachführbar ist,

(c) Mittel vorgesehen sind, welche an den Mikrokomputer ein Randsignal liefern, wenn der Lichtsender den Rand des Kartenblatts oder Kartenfelds erreicht, und

(d) der Mikrokomputer bei Erhalt des Randsignals

($d_1$) x' und y' nacheinander für die verschiedenen, in dem Speicher gespeicherten Kartendaten $x_M$, $y_M$ bildet,

($d_2$) jeweils prüft, ob für diese Daten

$$O \leq x' < 2a$$
$$O \leq y' < 2b$$

ist, und

($d_3$) bei Erfüllung dieser Bedingung mit einem Paar $x_{M1}$, $y_{M1}$ dieser gespeicherten Kartendaten

($d_{31}$) die weitere Prüfung einstellt,

($d_{32}$) die Kennzeichnung des zugehörigen neuen Kartenblatts zur Anzeige auf die Anzeigemittel gibt und

($d_{33}$) die Stellmittel zur Nachführung des Lichtsenders in die Stellung

$$x' = \frac{x - x_{M1}}{M} + a$$

$$y' = \frac{y - y_{M1}}{M} + b$$

(d) bei Nichterfüllung dieser Bedingung mit allen gespeicherten Paaren $x_M$, $y_M$ eine Fehlanzeige liefert.

Es wird auf diese Weise jedes Kartenblatt im Speicher durch Daten gekennzeichnet, die auf dem Kartenblatt selbst vermerkt sind, nämlich durch die Koordinaten seines Mittelpunktes z.B. in einem UTM-Gitter. Diese Daten sind kommensurabel mit den vom Navigationsrechner gelieferten Positionsdaten. Der Mikrokomputer kann bei Erscheinen eines Randsignals ausrechnen, ob eine Karte existiert, die unter Berücksichtigung der Abmessungen des Kartenblattes die jeweils vom Navigationsrechner gelieferte Position erfasst. Der Benutzer selbst braucht sich nicht um die gegenseitige Lage der einzelnen Kartenblätter zu kümmern.

Weitere Ausgestaltungen der Erfindung sind Gegenstand der Unteransprüche.

Die Erfindung ist nachstehend an einem bevorzugten Ausführungsbeispiel unter Bezugnahme auf die zugehörigen Zeichnungen näher erläutert:

Fig. 1 zeigt als Blockdiagramm das Navigationsgerät mit dem Positionsanzeigegerät.

Fig. 2 ist eine Draufsicht des Positionsanzeigegeräts.

Fig. 3 ist eine zugehörige Seitenansicht.

Fig. 4 zeigt das Bedienfeld des Positionsanzeigegeräts.

Fig. 5 zeigt die Anordnung der digitalen Anzeigemittel bei dem Positionsanzeigegerät.

Fig. 6 ist eine perspektivische Explosionsansicht und zeigt den mechanischen Aufbau des Positionsanzeigegeräts.

Fig. 7 zeigt eine bei dem Positionsanzeigegerät benutzte Kartentasche für die Aufnahme der Kartenblätter.

Fig. 8 ist eine schematische Darstellung und veranschaulicht die Bedeutung und Beziehung der verschiedenen Koordinaten.

Fig. 9 zeigt die Bezeichnung und (geographische) Anordnung verschiedener, mit dem Positionsanzeigegerät benutzter Kartenblätter.

Fig. 10 zeigt ein Randkartenblatt, das aus Teilen von vier Standardkarten aufgebaut ist, die in einer gemeinsamen Kartentasche gehaltert sind.

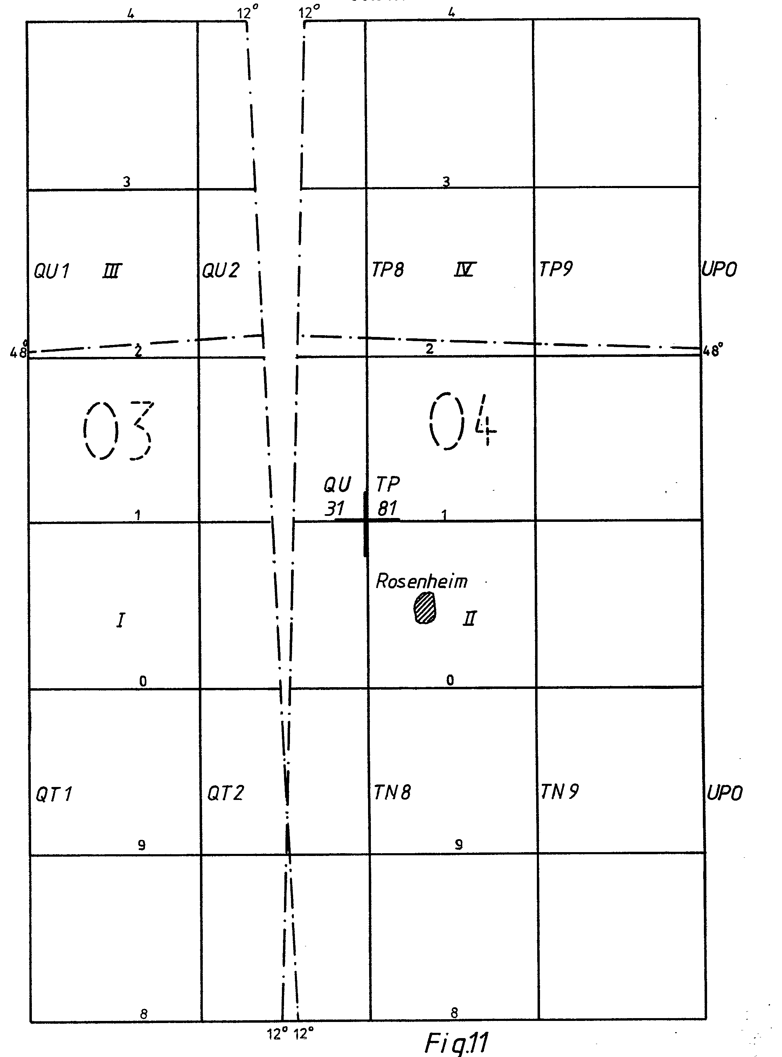

Fig. 11 zeigt zwei Zonenrandblätter, die aneinander angrenzende, aber zu unterschiedlichen Zonen des UTM-Gitters gehörige Gebiete zeigen und die in einer gemeinsamen Kartentasche gehaltert sind.

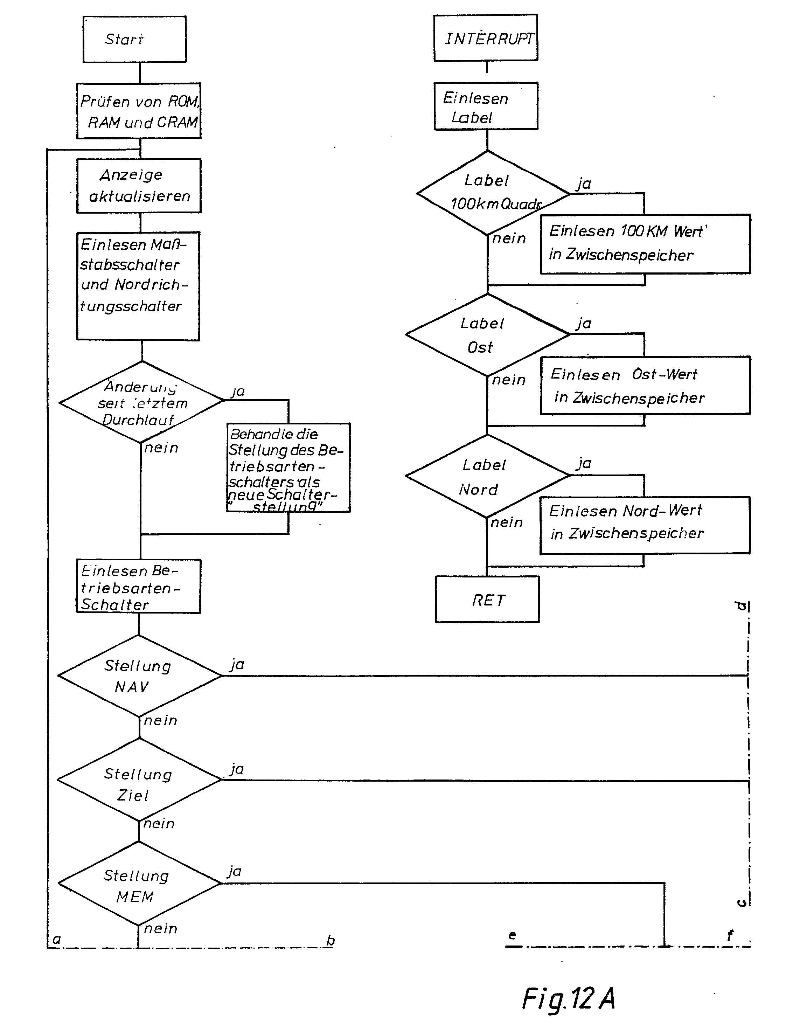

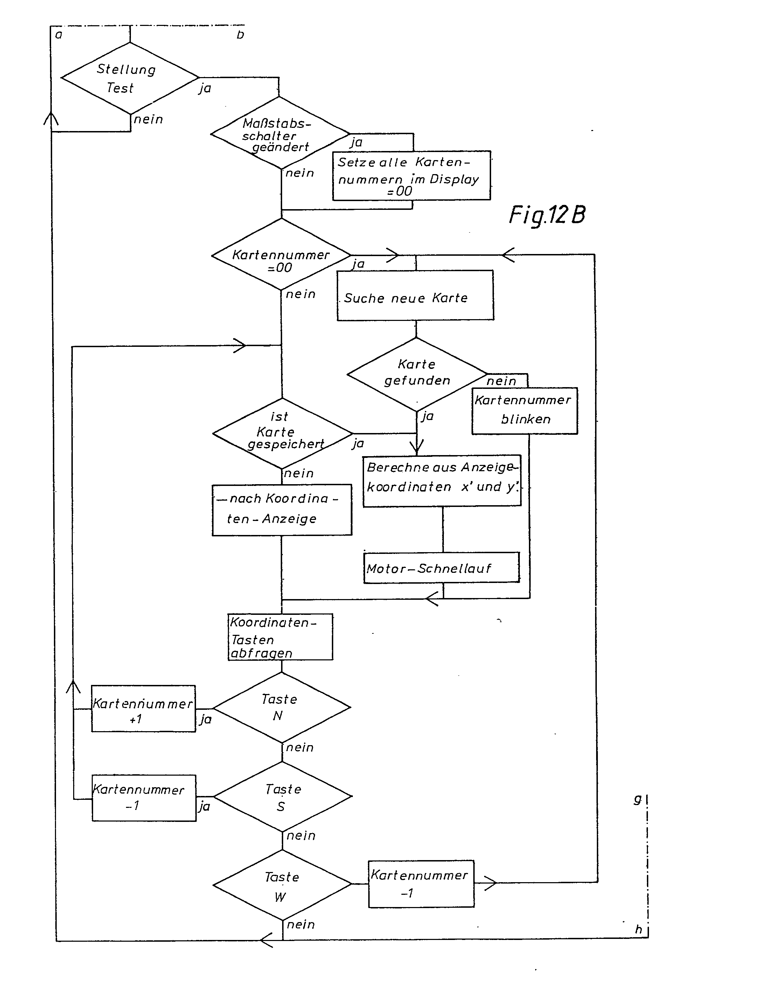

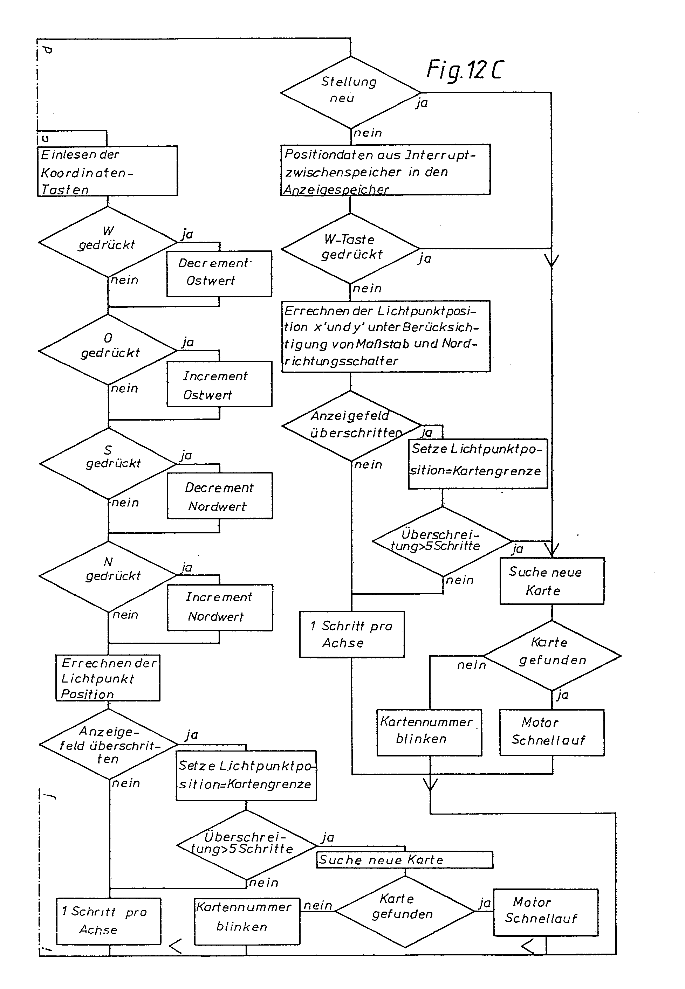

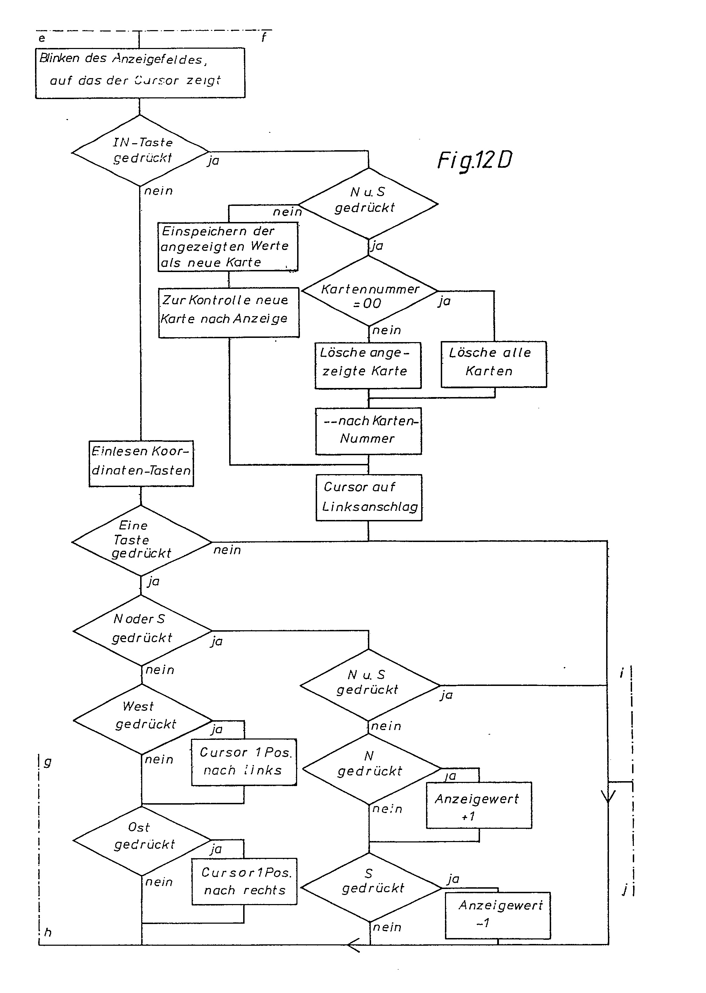

Fig. 12 ist ein Flussdiagramm und veranschaulicht die Arbeitsweise des erfindungsgemässen Positionsanzeigegeräts.

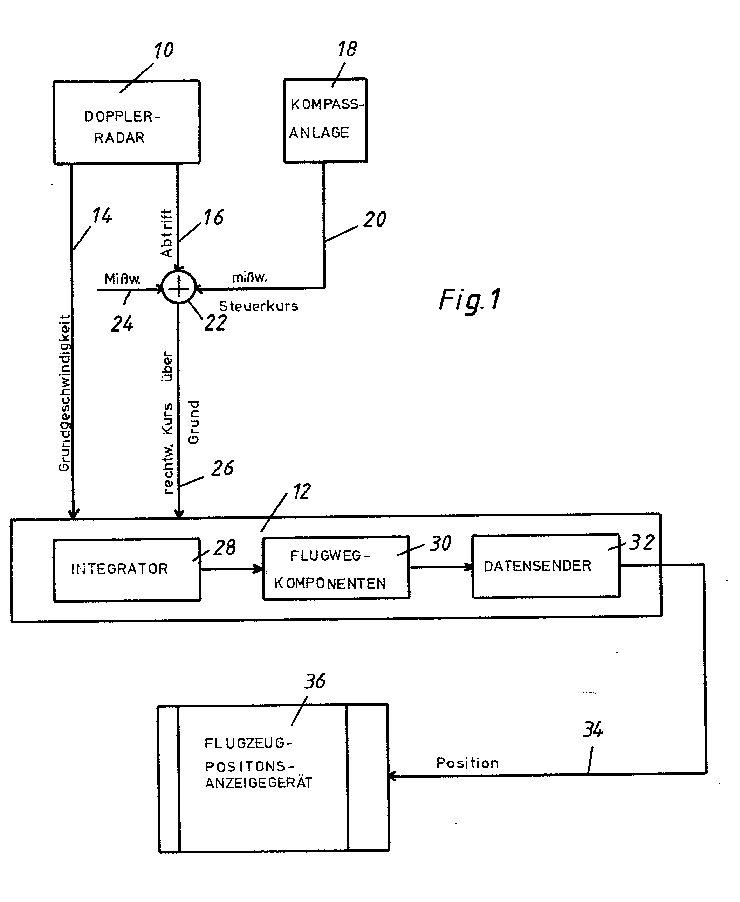

In Fig. 1 ist mit 10 ein an einem Flugzeug angebrachtes Dopplerradar bezeichnet. Das Dopplerradar liefert die Geschwindigkeit des Flugzeugs über Grund an einen Navigationsrechner 12, wie durch den Pfeil 14 angedeutet ist. Sie liefert weiterhin, wie durch Pfeil 16 angedeutet ist, die Abtrift des Flugzeugs. Eine Kompassanlage 18 liefert, wie durch Pfeil 20 angedeutet, den missweisenden Steuerkurs. Bei 22 wird der missweisende Steuerkurs in bekannter Weise durch den Abtriftwinkel sowie die vom Navigationsrechner 12 in nicht dargestellter Weise gelieferte aktuelle Ortsmissweisung (Pfeil 24) korrigiert. Der so erhaltene, durch den Pfeil 26 dargestellte rechtweisende Kurs wird ebenfalls dem Navigationsrechner 12 zugeführt. Aus Geschwindigkeit und rechtweisendem Kurs ergeben sich die Geschwindigkeitskomponenten. Durch einen Integrator 28 des Navigationsrechners 12 werden daraus die Komponenten des Flugwegs, also die Position des Flugzeugs bezogen auf einen Ausgangspunkt gebildet, wie durch Block 30 dargestellt ist. Die so erhaltenen Positionssignale werden durch einen Datensender 32 über Leitung 34 auf das Positionsanzeigegerät 36 gegeben.

Das ist eine bekannte und daher nicht im einzelnen beschriebene Technik.

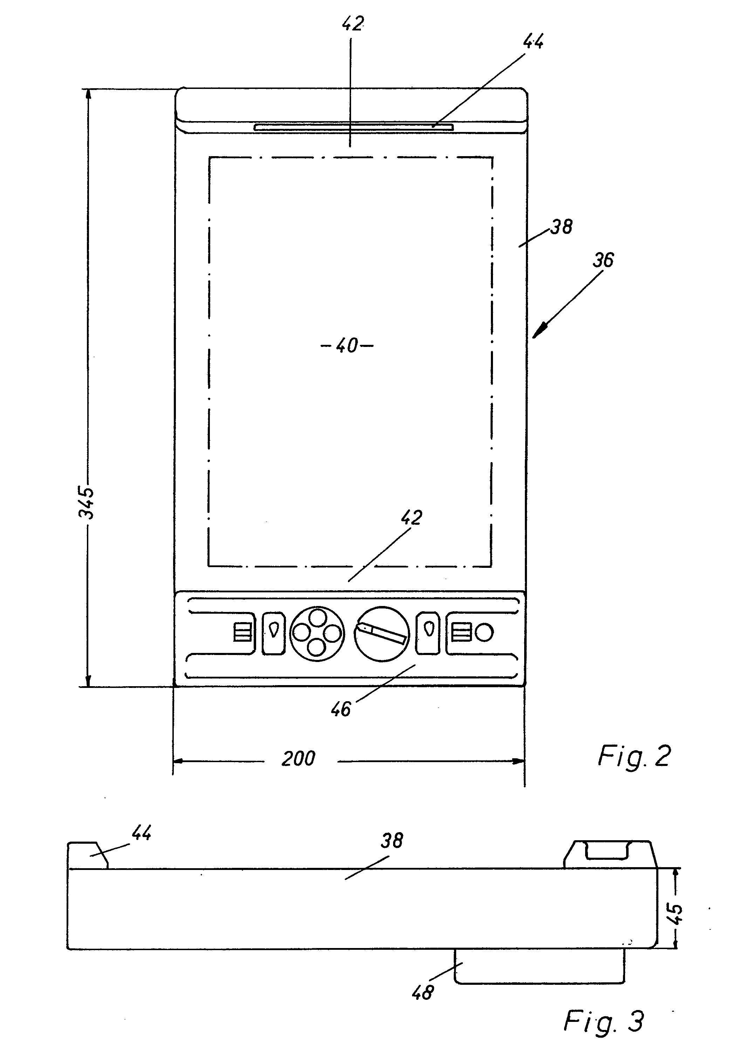

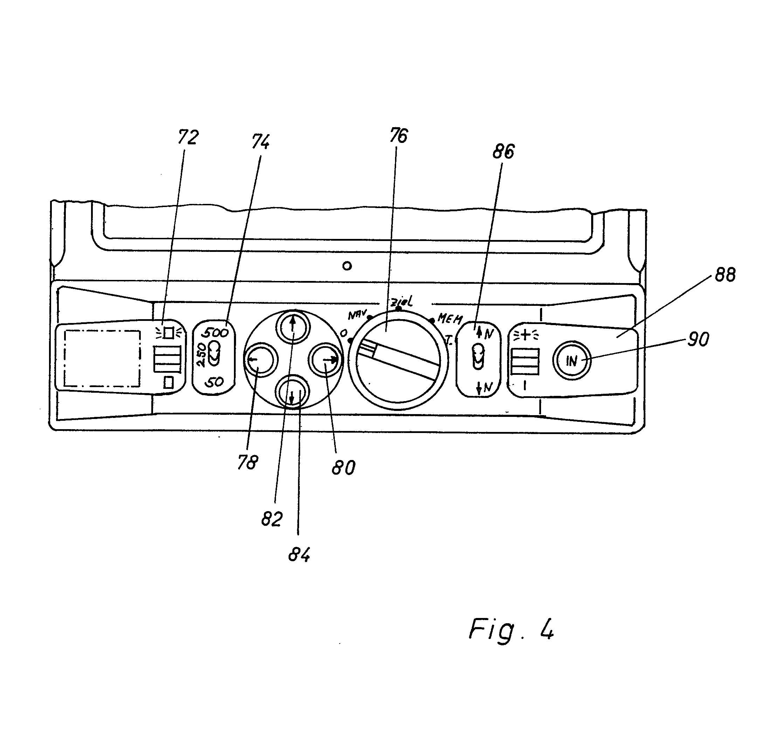

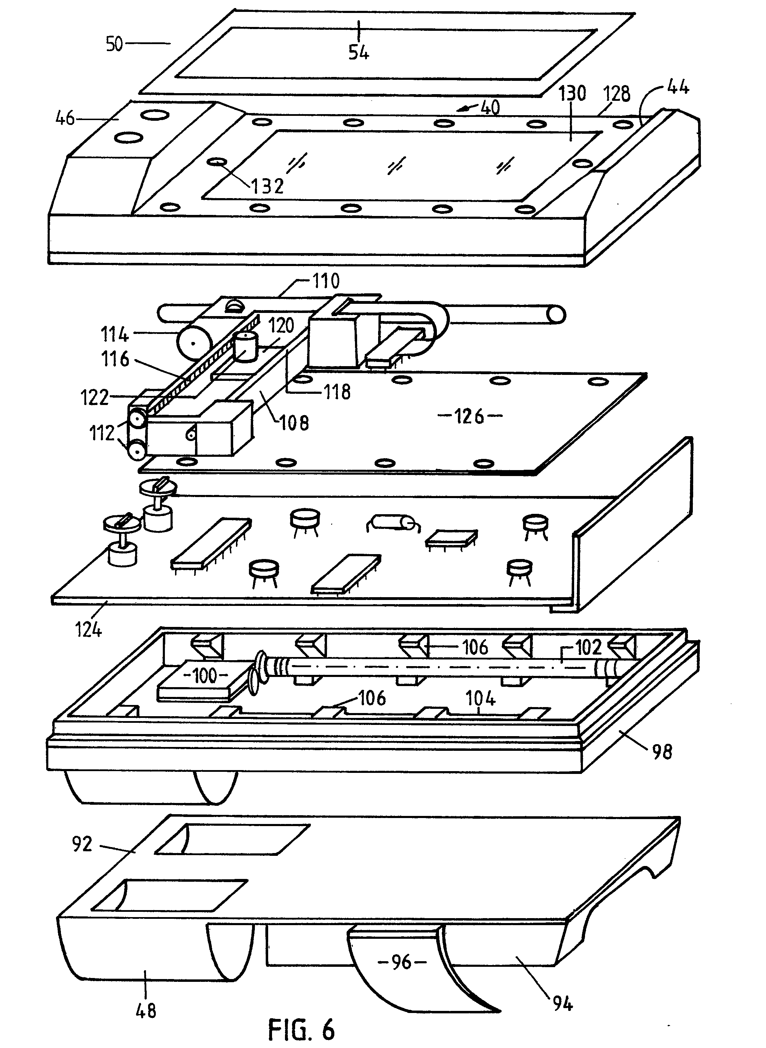

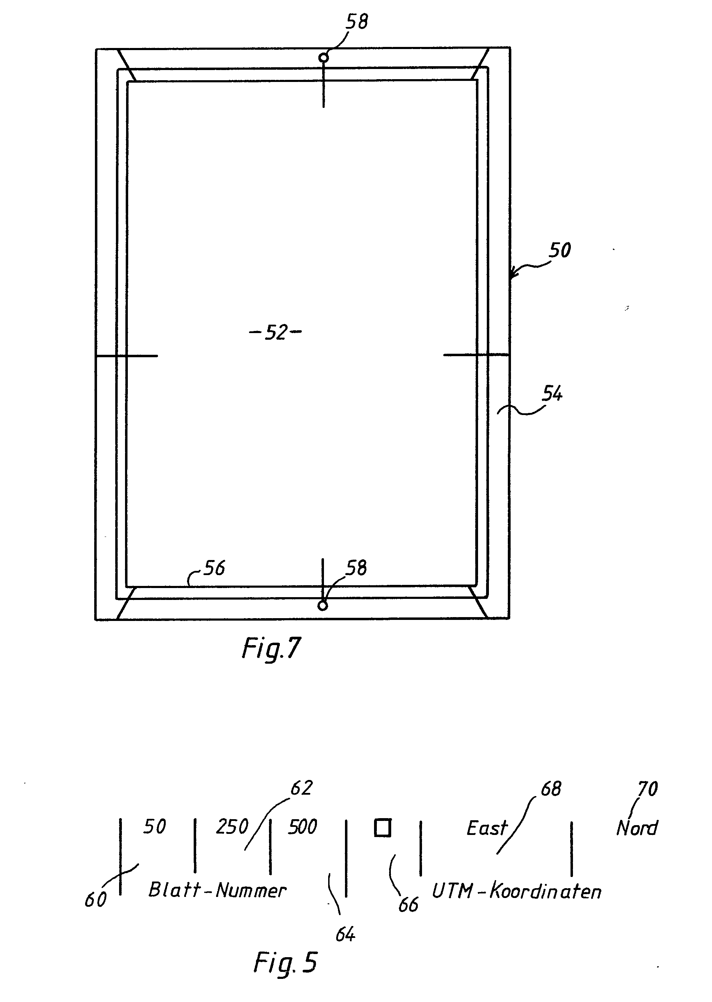

Das Positionsanzeigegerät 36 enthält ein Gehäuse 38 von flach-rechteckiger Grundform, das auf seiner Oberfläche eine rechteckige, ebene Kartenaufnahme 40 bildet. Die Kartenaufnahme 40 enthält Mittel, um Kartenblätter in definierter Lage zu haltern. Kartenblätter, die in rechteckigen, an die Abmessungen der Kartenaufnahme angepassten, transparenten Kartentaschen angeordnet sind, können an Anschläge angelegt und zusätzlich durch Stifte 42, welche durch Löcher der Kartentasche hindurchragen, genau zentriert gehalten werden. An dem in Fig. 2 oberen Ende bildet das Gerät ein Anzeigefeld 44 mit digitalen Anzeigemitteln, wie unten unter Bezugnahme auf Fig. 5 noch näher erläutert wird. An dem in Fig. 2 unten liegenden Rand des Gehäuses 38 ist ein Bedienfeld 46 vorgesehen, wie unten unter Bezugnahme auf Fig. 4 noch erläutert werden wird. Auf der Unterseite trägt das Gehäuse 38 wulstförmige Glieder 48, mit denen das Gerät auf dem Knie des Piloten gehalten und gegen seitliche Bewegungen gesichert werden kann.

Fig. 7 zeigt eine Kartentasche 50 mit einem transparenten Unterteil 52, auf welcher die Kartenblätter aufliegen, einem Federstahlrand 54 und einem über die Kartenblätter greifenden und diese haltenden transparenten Rand 56. Die Kartenblätter werden zwischen dem Unterteil 52 und dem Rand 56 gehalten. Die Kartentasche 50 wird auf die Aufnahme 40 aufgelegt und durch Anschläge sowie die Löcher 58, welche auf die Stifte 42 aufgesetzt werden, zentriert gehalten.

Das Anzeigefeld mit den digitalen Anzeigemitteln ist in Fig. 5 dargestellt. Das Anzeigefeld enthält drei zweistellige LED-, LCD- oder Glühfadenanzeige-Fenster 60, 62, 64 je nachdem, welcher Massstab, nämlich 1 : 50 000, 1 : 250 000 oder 1 : 500 000 gewählt worden ist, erscheint die Nummer des aufzulegenden Kartenblatts oder Kartenfeldes in dem Fenster 60, 62 oder 64. In einem zweistelligen Fenster 66 erscheint die Buchstabenkennung der UTM-Hundertkilometerquadrate. Schliesslich sind zwei vierstellige Fenster 68 und 70 vorgesehen, in denen die Positionsangabe in Ost- und Nord-Positionskoordinaten erscheint. Bei dem üblichen UTM-Koordinatensystem ist diese Positionsangabe jeweils über achtzehn Längen- und Breitengrade hinweg eindeutig.

In den Anzeigefeldern 68 und 70 können auch die Koordinaten von Kartenzielen abgelesen werden, auf die in noch zu beschreibender Weise der Lichtpunkt der Positionsanzeige eingestellt wird.

Fig. 4 zeigt im einzelnen das Bedienfeld. Mit 72 ist ein Kippschalter bezeichnet, durch den die Kartenfeldbeleuchtung regelbar ist. Durch einen Kippschalter 74 sind drei Kartenmassstäbe 1 : 50 000, 1 : 250 000 und 1 : 500 000 einstellbar. Mit 76 ist ein Drehschalter zur Wahl der Betriebsarten bezeichnet. Der Drehschalter 76 kann auf die fünf Betriebsarten «O«, «NAV» (= Navigation), «ZIEL» (= manuelle Steuerung des Lichtpunktes auf ein in der Karte angegebenes Ziel), «MEM» (= Eingabe von Kartendaten in den Speicher) und «TEST») geschaltet werden. Durch vier Drucktasten 78,80 und 82,84 kann in der Betriebsart «ZIEL» der Lichtpunkt manuell gesteuert werden, während die Drucktasten in der Betriebsart «MEM» zur Eingabe von Kartendaten in den Speicher dienen. Durch einen Umschalter 86 kann berücksichtigt werden, ob das Kartenblatt so eingelegt ist, dass die Nordrichtung oben in Fig. 4 liegt, wie das der üblichen Betrachtung einer Karte entspricht, oder ob die Karte so eingelegt ist, dass die Südrichtung nach oben in Fig. 4 zeigt. Die letztere Anordnung des Kartenblatts ist vorteilhaft und erleichtert die Orientierung, wenn die Flugrichtung überwiegend nach Süden verläuft. Schliesslich kann durch einen Kippschalter 88 die Helligkeit des Lichtpunktes und der digitalen Anzeigemittel verändert werden. Eine Taste 90 bewirkt in der Betriebsart «MEM» die Übernahme der von den Anzeigemitteln (Fig. 5) angezeigten Daten in den Speicher.

Der mechanische Aufbau des Geräts ist in Fig. 6 perspektivisch als Explosionsansicht dargestellt.

Das Gehäuse 38 enthält einen Unterteil 92 mit den festen Ansätzen 48 für die Halterung des Geräts auf dem Knie des Piloten. Ferner ist eine bewegliche Kniehalterung 94 vorgesehen. An dieser ist ein Riemen 96 angebracht, welcher um den Oberschenkel des Piloten herumgelegt und festgezogen werden kann, so dass das Gerät sicher auf dem Knie des Piloten gehalten ist. Auf dem Gehäuseunterteil sitzt ein unterer, rahmenartiger Gehäuseteil 98. Dieser trägt einen Schrittmotor 100, der eine Spindel 102 für den Y-Antrieb des Lichtsenders trägt. Mit einem Gewinde versehene Spindel 102 ist längs einer Längsseite des unteren Gehäuseteils 98 angeordnet. Längs der gegenüberliegenden Längsseite verläuft eine Führungsstange 104. Um Schwingungen zu vermeiden, die bei bestimmten Geschwindigkeiten auftreten könnten, sind die Spindel 102 und die Führungsstange 104 längs der Längsseiten durch Halteglieder 106 mehrfach gelagert. Eine Brücke 108, die sich zwischen der Spindel 102 und der Führungsstange 104 erstreckt, ist auf der Spindel 102 mittels einer geschlitzten Mutter 110 und auf der Führungsstange 104 durch Rollen 112 so geführt, dass sich die Brücke 108 an den Haltegliedern 106 vorbeibewegen kann. Die Brücke 108 trägt wiederum einen Schrittmotor 114, durch den eine Gewindespindel 116, die sich längs der Brücke, also in X-Richtung und senkrecht zu der Spindel 2 erstreckt, angetrieben werden kann. Auf der Spindel 116 und einer Führungsstange 118 ist ein Schlitten 120 geführt, auf welchem ein Lichtsender 122 zur Erzeugung eines Lichtpunkts auf dem Kartenblatt sitzt. Auf einer Elektronikplatine 124, die in den unteren Gehäuseteil 98 einsetzbar ist und unterhalb der Spindel 102 und Führungsstange 104 sitzt, sind u.a. der Mikrokomputer mit einem Mikroprozessor INTEL 80,85 als zentraler Einheit, das Netzteil und die Elemente für die Gerätebedienung angeordnet. Oberhalb der Elektronikplatine ist eine Leuchtplatte 126 vorgesehen, durch welche das Kartenblatt bei Dunkelheit gleichmässig beleuchtbar ist.

Ein Gehäuseoberteil 128 enthält das Bedienfeld 46 und das Anzeigefeld 44. Dazwischen ist die Kartenaufnahme 40 vorgesehen, die einen durch eine Glasplatte 130 abgeschlossenen rechteckigen Durchbruch des Gehäuseoberteils 128 enthält. Um den Durchbruch herum ist ein Rand gebildet, in welchen Folienmagnete 132 eingelassen sind. Auf diesen Folienmagneten haftet der aus Federstahl hergestellte Rand 54 der Kartentasche 50.

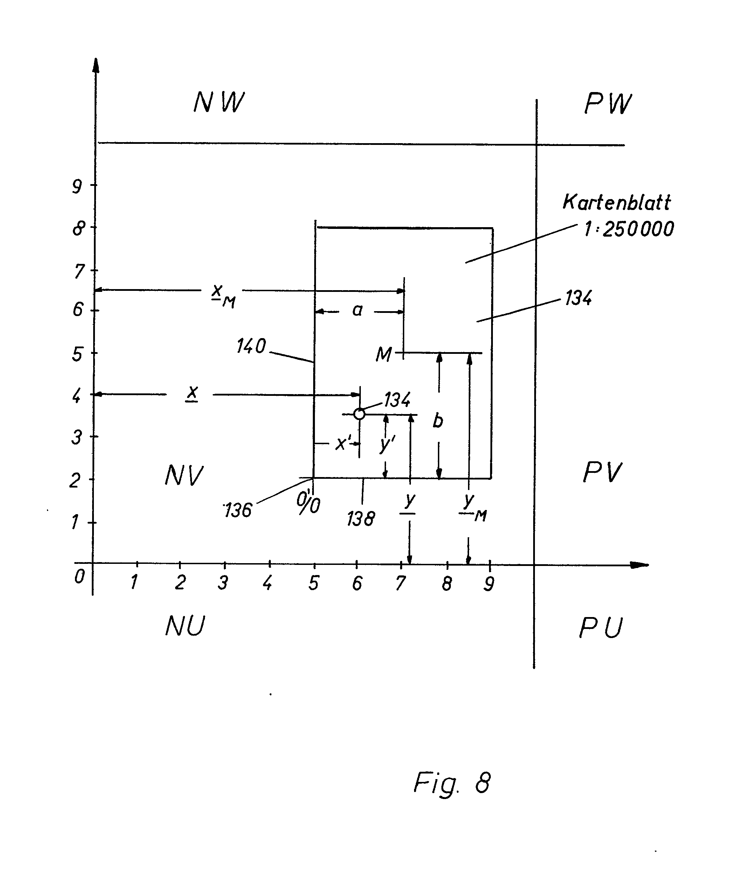

In Fig. 8 ist ein Gitterkoordinatensystem dargestellt. Das Gitterkoordinatensystem enthält Hundertkilometerquadrate, die durch Paare von Buchstaben, z.B. NV, bezeichnet sind. Die Positionskoordinaten in diesem Gitterkoordinatensystem sind mit x und y bezeichnet.

Ein Kartenblatt 134 umfasst ein Gebiet, welches durch Gitterlinien des UTM-Gitters begrenzt ist, wobei auch der Mittelpunkt M des Kartenblatts auf den Schnittpunkt von zwei Gitterlinien zu liegen kommt. Die Abmessungen des Kartenblatts sind 2a bzw. 2b. Mit x', Y' sind die Koordinaten des Lichtpunkts 134, der die Position des Fahrzeugs angibt, in einem Koordinatensystem bezeichnet, dessen Ursprung in der linken unteren Ecke 136 des Kartenblatts 134 liegt und dessen Achsen längs der unteren bzw. linken Kante 138 bzw. 140 des Kartenblatts 134 verlaufen.

Das beschriebene Gerät arbeitet wie folgt:

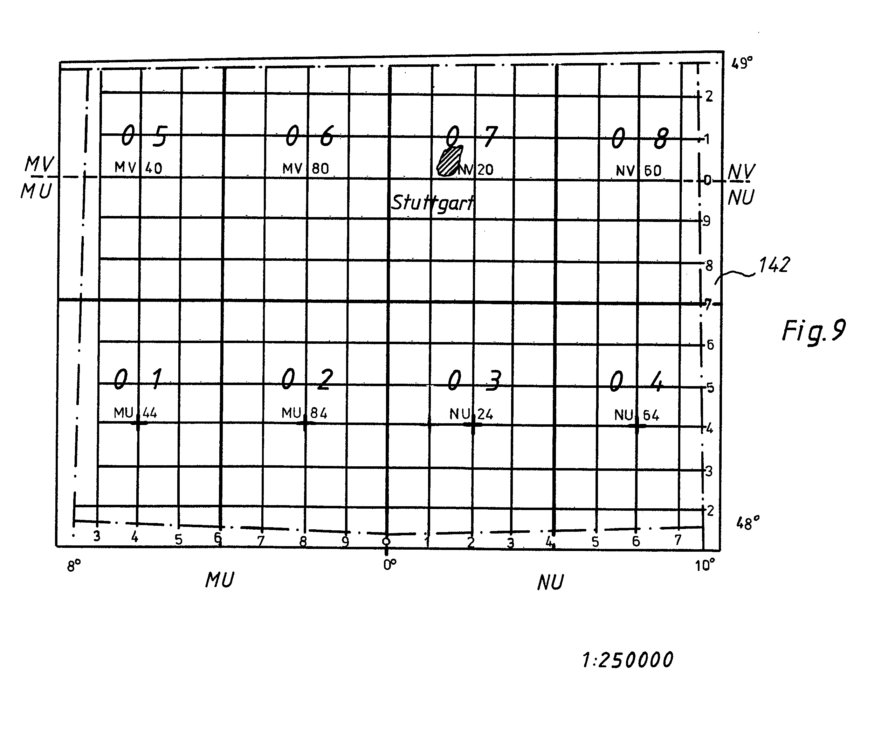

Zur Vorbereitung des Fluges (oder einer sonstigen Fahrzeugmission) wird eine Originalkarte 142 (Fig. 9) des zu überfliegenden oder zu durchfahrenden Gebiets in Kartenblätter unterteilt, die längs Gitterlinien des UTM-Gitters so geschnitten sind, dass jeweils ein Kartenmittelpunkt M auf der Schnittlinie zweier Gitterlinien liegt. Dabei können gegebenenfalls, wie aus Fig. 9 ersichtlich ist, einzelne Kartenblätter durch die Grenzen der Originalkarte abgeschnitten sein. Die einzelnen Kartenblätter werden fortlaufend numeriert. Ausserdem werden jedem Kartenblatt die UTM-Koordinaten seines Mittelpunktes zugeordnet. Die Kartenblätter werden in Kartentaschen 50 (Fig. 7) so eingelegt, dass die Mittelpunkte M mit dem Mittelpunkt der Kartentasche 50 zusammenfallen und die UTM-Gitterlinien parallel zu den Kanten der Kartentasche verlaufen.

Die fortlaufende Numerierung und die zugehörigen Koordinaten der Kartenmittelpunkte werden als «Kartendaten» in einen Speicher eingelesen, der in diesem Fall ein RAM ist. Das Einlesen geschieht in folgender Weise:

Der Drehschalter 76 wird in die Stellung «MEM» gestellt. Durch die Tasten 78 und 80 kann das jeweils angesprochene Fenster der Anzeigemittel (Fig. 5) nach links oder rechts verschoben werden. Das jeweils angesprochene Fenster ist dadurch erkennbar, dass die in diesem Fenster erscheinende Anzeige blinkt. Durch Betätigen der Tasten 82 und 84 kann die Anzeige in diesem Fenster schrittweise erhöht oder erniedrigt werden. Wenn beispielsweise der Schalter 74 in der dargestellten Stellung 1 : 500 000 steht, was dem Massstab der verwendeten Karte entspricht, dann blinkt die Anzeige im Fenster 64. Es kann dann durch Betätigen der Tasten 82 oder 84 diese Anzeige z.B. auf 01 gebracht werden. Ein Druck auf die Taste 80 lässt jetzt die Anzeige im ersten Feld des Fensters 66 blinken. Diese Anzeige wird durch Betätigen der Tasten 82 oder 84 auf «M» gebracht. Ein Druck auf die Taste 80 bewirkt ein Ansprechen des rechten Anzeigefelds im Fenster 66, in welchem die Anzeige durch die Tasten 82 und 84 auf «U» gebracht wird. Ein weiterer Druck auf die Taste 80 lässt die Anzeige im Fenster 68 blinken, die mittels der Tasten 82 und 84 auf 4000 gebracht wird. (Im Massstab 1 : 500 000 entspricht der Abstand zweier Gitterlinien der Anzeige «4000», was der ersten «4» in den Mittelpunktkoordinaten des Kartenblatts 01 entspricht). In gleicher Weise wird die Anzeige im Fenster 70 auf 4000 gestellt. Dann wird diese Anzeige durch Druck auf die Taste 90 in den Speicher übernommen. In gleicher Weise werden die Kartendaten der übrigen Kartenblätter in den Speicher eingelesen.

In der Stellung «NAV» des Drehschalters 76 bildet der Mikrokomputer x' und y' (Fig. 8) nach der Beziehung.

$$x' = \frac{x - x_M}{M} + a$$

$$y' = \frac{y - y_M}{M} + b.$$

Dabei sind x und y die Impositionsrechner noch gespeicherten Gitterkoordinaten der Fahrzeugposition, $x_M$ und $y_M$ die Koordinaten des Kartenmittelpunkts. Das zugehörige Kartenblatt wird durch die Anzeigemittel angezeigt. Der Pilot braucht dann nur dieses Kartenblatt auf die Kartenaufnahme 40 aufzulegen. Der Mikrokomputer steuert die Schrittmotore 100 und 114 so, dass der Lichtsender 122 den so in Bezug auf die eine Kartenecke ermittelten Koordinaten x', y' automatisch nachgeführt wird. Die Schrittmotore 100 und 114 mit den zugehörigen Stellspindeln 102 und 116 bilden die Stellmittel für den Lichtsender. Es sind Mittel vorgesehen, welche an den Mikrokomputer ein Randsignal liefern, wenn der Lichtsender 122 den Rand des Kartenblatts oder Kartenfeldes erreicht. Die Steuerung der Schrittmotore 100 und 116 und die Erzeugung des Randsignals kann so erfolgen, wie es in der deutschen Patentanmeldung P 2 805 363.6 und der US-Patentanmeldung Serial No. 920 184 beschrieben ist.

Bei Erhalt des Randsignals, wenn also die Position des Flugzeugs oder Fahrzeugs das jeweils aufgelegte Kartenblatt verlässt, bildet der Mikrokomputer nacheinander x' und y' für die verschiedenen in dem Speicher gespeicherten Kartenda-

ten $x_M$ und $y_M$. Er prüft jeweils, ob für diese Daten

$$O \leq x' < 2a \text{ und}$$
$$O \leq y' < 2b$$

ist. Bei Erfüllung dieser Bedingung mit einem Paar $x_{M1}$, $y_{M1}$ dieser gespeicherten Kartendaten stellt der Mikrokomputer die weitere Prüfung ein. Die Kennzeichnung des zugehörigen neuen Kartenblatts wird zur Anzeige auf die Anzeigemittel 44 (Fig. 2 und 5) gegeben. Die Stellmittel 100, 116 werden zur Nachführung des Lichtsenders 122 in die Stellung

$$x' = \frac{x - x_{M1}}{M} + a$$

$$y' = \frac{y - y_{M1}}{M} + b$$

angesteuert. Das bedeutet, dass der Lichtpunkt beispielsweise vom rechten (Ost-) Rand des einen Kartenblatts, z.B. des Kartenblatts 03 in Fig. 9, zum linken Rand springt und die Anzeige «04» erscheint, was bedeutet, dass die neue Stellung des Lichtpunkts der Position des Flugzeugs im anschliessenden Kartenblatt 04 entspricht. Bei Nichterfüllung der Ungleichungen für $x'$ und $y'$ mit allen gespeicherten Paaren $x_M$, $y_M$ liefert der Mikrokomputer eine Fehlanzeige, beispielsweise indem im Fenster 62 (bei Massstabeinstellung 1 : 250 000) das Zeichen «—» erscheint und blinkt.

Es ist auch möglich die Kartendaten eines bestimmten «Atlas» von Kartenblättern in einem austauschbaren, programmierbaren Festwertspeicher (PROM) zu speichern, der dann den Speicher zum Speichern der Kartendaten des Positionsanzeigegeräts bildet und bei Verwendung eines anderen «Atlas» durch einen anderen Festwertspeicher ersetzt wird. Damit kann die Eingabe der Kartendaten als Flugvorbereitung entfallen.

Bei üblichen Karten erscheint Nord oben und Süd unten. Wenn die Flugrichtung vorwiegend nach Süden verläuft, so ist der Pilot, der die Karte vor sich hat, gezwungen die Anzeige mit «Nordvorn» in das von ihm beobachtete Gesichtsfeld umzudenken, in welchem Süden vorn liegt. Das kann dadurch vermieden werden, dass die Ansteuerung der Stellmittel 100, 114 umschaltbar ist, derart, dass der Lichtsender dem Punkt ($2a - x'$, $2b - y'$) nachführbar ist. Der Pilot kann dann das Kartenblatt kopfstehend in die Kartenaufnahme 40 einlegen, so dass Süden oben in Fig. 2 also vorwärts von dem Piloten liegt und die Orientierung der Karte mit der Lage des beobachteten Geländes übereinstimmt.

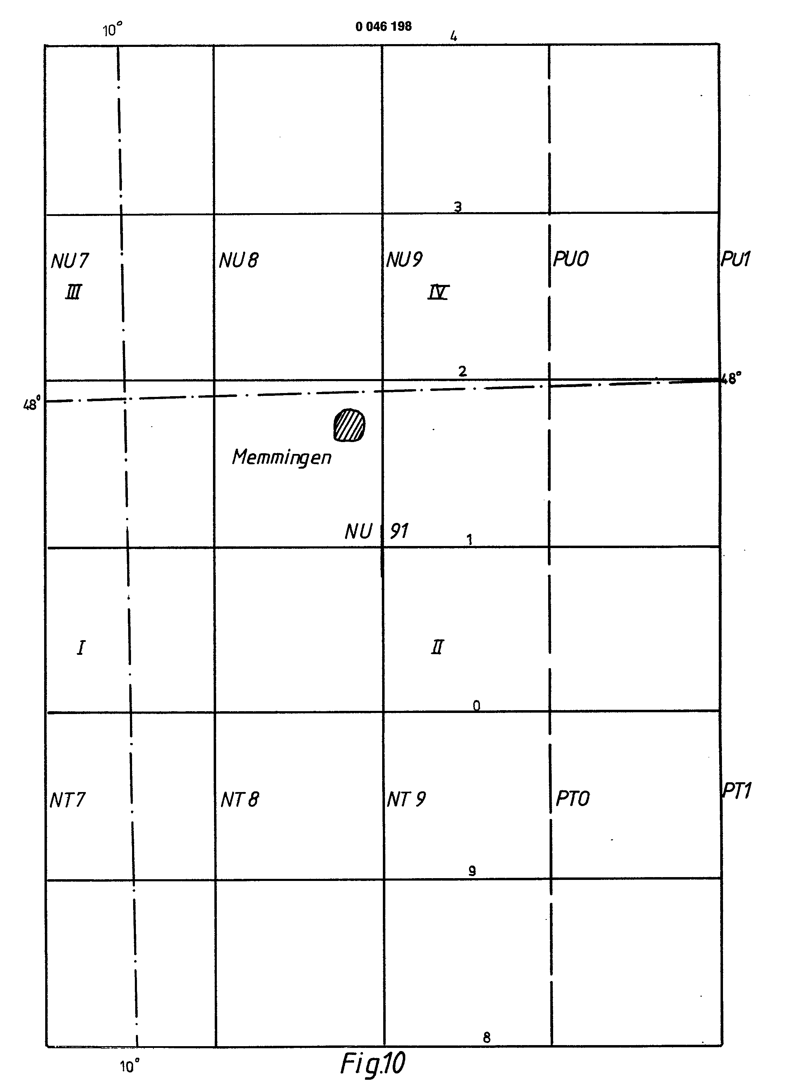

In der Kartentasche kann ein Kartenblatt aus Randteilen von verschiedenen, aneinander angrenzenden Standardkarten zusammengesetzt sein, wie das in Fig. 10 dargestellt ist.

Auf einem gemeinsamen, der Grösse eines normalen Kartenblatts entsprechenden rechteckigen transparenten Kartenträger, also praktisch der Kartentasche 50 von Fig. 7, können zwei aneinandergrenzende Zonenrandblätter, die unterschiedlichen UTM-Gitterzonen angehören so gehalten

sein, dass die Linien beider Gitternetze parallel zu den Kanten des Kartenträgers verlaufen. Die Grenzen der Gitterzonen, die von einem Längengrad gebildet sind, verlaufen unter unterschiedlichen Winkeln zu den Gitterlinien. In Fig. 4 ist erkennbar, dass der zwölfte Längengrad, der die Grenze zwischen verschiedenen UTM-Gitterzonen bildet, in dem linken Zonenrandblatt unter einem anderen Winkel verläuft als in dem rechten, wenn die Gitterlinie der beiden Gitternetze parallel zueinander und zu den Kanten des Kartenträgers angeordnet sind. Jedes der beiden Zonenrandblätter trägt eine gesonderte Bezeichnung (03 bzw. 04) und ist mit seinen zugehörigen Kartendaten gesondert abgespeichert. Der Speicher enthält also zu dem Kartenblatt 03 die Mittelpunktskoordinaten QU31 und zu dem Kartenblatt 04 die Mittelpunktskoordinaten TP81. Wenn die vom Positionsrechner gelieferte Fahrzeugposition den zwölften Längengrad überschreitet, werden automatisch die Positionsdaten in Koordinaten der nächsten UTM-Gitterzone angegeben. Der Mikrokomputer findet diese Positionsdaten nicht auf dem Kartenblatt 03. Er sucht ein anderes Kartenblatt, in welches diese Positionsdaten passen und findet das Kartenblatt 04, so dass der Lichtpunkt automatisch in die auf diesen Kartenblatt bezogene Stellung gefahren wird. Der Lichtpunkt überspringt daher die in der Kartentasche gebildete Lücke zwischen den beiden jeweils den zwölften Längengrad darstellenden Linien und setzt dann seine Bahn in dem rechten Kartenblatt 04 fort.

Wenn der Drehschalter 76 auf die Betriebsart «ZIEL» geschaltet wird, dann kann der Lichtpunkt mittels der Tasten 78 bis 84, durch welche die Positionsangaben in den Fenstern 68 und 70 veränderbar sind, in der Karte auf ein dort angegebenes Ziel verschoben werden. Wenn der Lichtpunkt auf diesem Ziel ist, können die Zielkoordinaten unmittelbar in den Fenstern 68 und 70 abgelesen werden.

In der Betriebsart «NAV» = Navigation wird in den Fenstern 68 und 70 laufend die vom Navigationsgerät gelieferte augenblickliche Position des Fahrzeugs angezeigt.

In der Betriebsart «TEST» kann der Speicherinhalt abgefragt werden.

Statt Kartenblättern in Kartentaschen können bei dem Gerät auch Originalkarten benutzt werden. In die Originalkarten werden mittels einer Schablone «Kartenfelder» eingezeichnet, die durch Gitterlinien des UTM-Gitters begrenzt sind und wie die ausgeschnittenen Kartenblätter einen Mittelpunkt auf der Schnittlinie zweier Gitterlinien besitzen. Diese Kartenfelder werden wie die Kartenblätter in den Speicher eingegeben. Im Betrieb wird die Originalkarte längs der Gitterlinien gefaltet. Die Karte wird dann mittels eines Rahmens durch Magnetwirkung in ihrer richtigen Lage an der Kartenaufnahme festgeklemmt.

**Patentansprüche**

1. Positionsanzeigegerät zur Lichtpunktanzeige der Position von Fahrzeugen, insbesondere von Flugzeugen oder Hubschraubern, auf einer Karte, enthaltend eine ebene Kartenaufnahme (40) zur Aufnahme und Halterung von Kartenblättern in definierter Lage, einen unterhalb der Kartenaufnahme (40) angeordneten, durch Stellmittel (100, 114) in zwei Koordinaten steuerbaren Lichtsender (122) zur Erzeugung eines Lichtpunktes auf dem Kartenblatt, einen Mikrokomputer, auf den die Gitterkoordinaten der Fahrzeugposition von einem Navigationsrechner (12) aufschaltbar sind und durch die die Stellmittel (110, 114) des Lichtsenders (122) steuerbar sind, einen Speicher zum Speichern von Kartendaten, der mit dem Mikrokomputer zusammenwirkt, und Anzeigemittel (44), welche mit dem Mikrokomputer verbunden sind und durch welche das für die jeweiligen Gitterkoordinaten erforderliche Kartenblatt oder Kartenfeld angezeigt wird, dadurch gekennzeichnet, dass

(a) der Mikrokomputer Mittel enthält zur Bildung von

$$x' = \frac{x - x_M}{M} + a$$

$$y' = \frac{y - y_M}{M} + b \ ,$$

wobei

x, y die von dem Positionsrechner (12) ausgegebenen Gitterkoordinaten der Fahrzeugposition,

$x_M$, $y_M$ die von dem Speicher gelieferten Koordinaten des Kartenmittelpunktes,

M der Kartenmassstab und

a, b die halben Höhen- bzw. Breitenabmessungen des Kartenblatts oder Kartenfelds sind,

(b) der Lichtsender (122) den so in bezug auf eine Kartenecke ermittelten Koordinaten durch die Stellmittel (100, 116) automatisch nachführbar ist,

(c) Mittel vorgesehen sind, welche an den Mikrokomputer ein Randsignal liefern, wenn der Lichtsender (122) den Rand des Kartenblatts oder Kartenfelds erreicht, und

(d) der Mikrokomputer bei Erhalt des Randsignals

(d₁) x' und y' nacheinander für die verschiedenen, in dem Speicher gespeicherten Kartendaten $x_M$, $y_M$ bildet,

(d₂) jeweils prüft, ob für diese Daten

$$O \leq x' < 2a$$
$$O \leq y' < 2b$$

ist, und

(d₃) bei Erfüllung dieser Bildung mit einem Paar $x_{M1}$, $y_{M1}$ dieser gespeicherten Kartendaten

(d₃₁) die weitere Prüfung einstellt,

(d₃₂) die Kennzeichnung des zugehörigen neuen Kartenblatts zur Anzeige auf die Anzeigemittel gibt und

(d₃₃) die Stellmittel (100, 116) zur Nachführung des Lichtsenders (122) in die Stellung

$$a' = \frac{x - x_{M1}}{M} + a$$

$$y' = \frac{y - y_{M1}}{M} + b \quad \text{ansteuert und}$$

(d₄) bei Nichterfüllung dieser Bedingung mit allen gespeicherten Paaren $x_M$, $y_M$ eine Fehlanzeige liefert.

2. Positionsanzeigegerät nach Anspruch 1, dadurch gekennzeichnet, dass die Ansteuerung der Stellmittel (100, 116) umschaltbar ist, derart, dass der Lichtsender (122) dem Punkt (2a–x', 2b–y') nachführbar ist.

3. Positionsanzeigegerät nach Anspruch 1, dadurch gekennzeichnet, dass der Speicher von einem austauschbaren, programmierbaren Festwertspeicher (PROM) gebildet ist.

4. Positionsanzeigegerät nach Anspruch 1, dadurch gekennzeichnet, dass

(a) zwei aneinandergrenzende Zonenrandblätter, die unterschiedlichen UTM-Gitterzonen angehören, auf einem gemeinsamen, der Grösse eines normalen Kartenblattes entsprechenden, rechteckigen transparenten Kartenträger (50) so gehaltert sind, dass die Linien beider Gitternetze parallel zu den Kanten des Kartenträgers verlaufen (Fig. 11), und

(b) jedes der beiden Zonenrandblätter in dem Speicher mit seinen zugehörigen Kartendaten gesondert abgespeichert ist.

## Claims

1. Position display instrument for light spot display of the position of vehicles, in particular of aircraft or helicopters, on a map, comprising a flat map holder (40) for accomodating and holding map sheets in well-defined position, a light transmitter (122) located below the map holder (40) for producing a light spot on the map sheet and movable in two coordinates by positioning means (100, 114), a microcomputer, to which the grid coordinates of the vehicle position are applied from a navigational computer (12) and by which the positioning means (110, 114) are controlled, a memory for storing map data, said memory cooperating with the microcomputer, and display means (44), which are connected with the microcomputer and by which the map sheet or map field required for the respective grid coordinates is displayed, characterized in that

(a) the microcomputer comprises means for forming

$$x' = \frac{x - x_M}{M} + a$$

$$y' = \frac{y - y_M}{M} + b \ ,$$

wherein

x, y are the grid coordinates of the vehicle position as output by the position computer (12),

$x_M$, $y_M$ are the coordinates of the map center as provided by the memory,

M is the map scale and

a, b are half the height and width dimensions, respectively, of the map sheet or map field,

(b) the light transmitter (122) is arranged by means of the positioning means (100, 116), to automatically follow-up the coordinates thus determined with respect to one map corner,

(c) means are provided for supplying an edge signal to the microcomputer, when the light transmitter (122) reaches the edge of the map sheet or map field, and

(d) the microcomputer, when receiving the edge signal,

($d_1$) forms x' and y' consecutively for the various map data $x_M$, $y_M$ stored in the memory,

($d_2$) tests, each time, whether for these data

$$O \leq x' < 2a$$
$$O \leq y' < 2a$$

and,

($d_3$) when this condition is met

($d_{31}$) discontinues further testing,

($d_{32}$) supplies the identification of the associated new map sheet for display to the display means, and

($d_{33}$) controls the positioning means (100, 116) to move the light transmitter (122) into the position

$$x' = \frac{x - x_{M1}}{M} + a$$

$$y' = \frac{y - y_{M1}}{M} + b$$

and

($d_4$) when this condition is not met with any of the stored pairs $x_M$, $y_M$, provides a nil return.

2. Position display instrument as set forth in claim 1, characterized in that the control of the positioning means (100, 116) is adapted to be switched over such that the light transmitter (122) is caused to follow the point (2a–x', 2b–y').

3. Position display instrument as set forth in claim 1, characterized in that the memory is an interchangeable, programmable read only memory (PROM).

4. Position display instrument as set forth in claim 1, characterized in that (a) two adjacent zone edge sheets, which belong to different UTM grid zones, are mounted on a common, rectangular, transparent map carrier (50) having the size of a normal map sheet such, that the lines of both grids are parallel to the edges of the map carrier (Fig. 11), and

(b) each of the two zone edge sheets is stored separately with its associated map data in the memory.

**Revendications**

1. Appareil indicateur de position destiné à l'indication par points lumineux de la position de véhicules, en particulier d'avions ou d'hélicoptères, sur une carte, comprenant un logement de cartes plan (40) appelé à loger et fixer des feuilles de carte dans une position définie, un émetteur de lumière (122) qui est disposé au-dessous du logement de cartes (40), et qui peut être commandé par des moyens de commande (100, 114) dans deux coordonnées, l'émetteur étant destiné à engendrer un point lumineux sur la feuille de carte, un micro-ordinateur auquel peuvent être appliquées les coordonnées de réseau de la position du véhicule depuis un ordinateur de navigation (12), et qui peut commander les moyens de commande (110, 114) de l'émetteur de lumière (122), une mémoire destinée à mémoriser des données de carte et coopérant avec le micro-ordinateur, et des moyens d'indication (44) reliés au micro-ordinateur et indiquant la feuille de carte ou le champs de carte requis pour les coordonnées de réseau respectives, caractérisé par le fait que

(a) le micro-ordinateur comprend des moyens appelés à former

$$x' = \frac{x - x_{M1}}{M} + a$$

$$y' = \frac{y - y_{M1}}{M} + b$$

x, y étant les coordonnées de réseau de la position du véhicule sorties par l'ordinateur de position (12),

$x_M$, $y_M$ étant les coordonnées du centre de la carte,

M étant l'échelle de carte, et

a, b étant la moitié des mesures de latitude et de hauteur de la feuille de carte ou du champs de carte,

(b) l'émetteur de lumière (122) peut automatiquement poursuivre les coordonnées ainsi obtenues relativement à un coin de carte grâce aux moyens de commande (100, 116),

(c) des moyens sont prévus, qui fournissent un signal de bord au micro-ordinateur, lorsque l'émetteur de lumière (122) atteint le bord de la feuille de carte ou du champs de carte, et

(d) le micro-ordinateur, lorsqu'il obtient le signal de bord,

($d_1$) forme x' et y' successivement pour les différentes données de carte $x_M$, $y_M$ mémorisées dans la mémoire,

($d_2$) examine à chaque fois s'il vaut pour ces données

$$O \leq x' < 2a$$
$$O \leq y' < 2b,$$

et

($d_3$) lorsque ces conditions sont remplies avec une paire $x_{M1}$, $y_{M1}$ de ces données de carte mémorisées,

($d_{31}$) il arrête tout autre examen,

($d_{32}$) il fait indiquer la caractérisation de la nouvelle feuille de carte associée par les moyens d'indication, et

($d_{33}$) il commande les moyens de commande (100, 116) pour la poursuite de l'émetteur de lumière (122) dans la position

$$a' = \frac{x - x_{M1}}{M} + a$$

$$y' = \frac{y - y_{M1}}{M} + b$$

et

($d_4$) lorsque ces conditions ne sont pas remplies avec toutes les paires $x_M$, $y_M$ mémorisées, il fournit une indication d'erreur.

2. Appareil indicateur de position selon la revendication 1, caractérisé par le fait que la commande des moyens de commande (100, 116) peut être changée de sorte que l'émetteur de lumière (122) poursuit le point (2a–x′, 2b–y′).

3. Appareil indicateur de position selon la revendication 1, caractérisé par le fait que la mémoire est formée par une mémoire des constantes (PROM) programmable et remplaçable.

4. Appareil indicateur de position selon la revendication 1, caractérisé par le fait que

(a) deux feuilles de bord de zone adjacentes appartenant à des zones de réseau UTM différentes, sont fixées sur un support de carte commun (50) transparent et rectangulaire qui correspond à la grandeur d'une feuille de carte normale, de sorte que les lignes des deux réseaux de quadrillage s'étendent parallèlement aux bords du support de carte (fig. 11), et

(b) chacune des deux feuilles de bord de zone est mémorisée séparément avec ces données de carte associées dans la mémoire.

*Fig.1*

Fig. 2

Fig. 3

Fig. 4

FIG. 6

17

58

-52-

50

54

56    58

## Fig.7

62

60    50    250 / 500    □    East / 68    70
                                            Nord

Blatt - Nummer    UTM - Koordinaten

64    66

## Fig. 5

Fig. 8

Fig.9

1:250000

Fig.10

Fig.11

Fig.12 A

a | b

Stellung Test

ja

nein

Maßstabs- schalter geändert

ja

Setze alle Karten- nummern im Display = 00

nein

*Fig.12 B*

Kartennummer = 00

ja

Suche neue Karte

nein

Karte gefunden

nein

Kartennummer blinken

ja

ist Karte gespeichert

ja

Berechne aus Anzeige- koordinaten x' und y'.

nein

— nach Koordina- ten – Anzeige

Motor–Schnellauf

Koordinaten- Tasten abfragen

Kartennummer +1

ja

Taste N

nein

Kartennummer –1

ja

Taste S

nein

Taste W

Kartennummer –1

nein

g

h

Fig. 12 C

Fig.12D

```
e ─────────────────────┬─────────────── f ─
┌─────────────────────────────┐
│ Blinken des Anzeigefeldes,   │
│   auf das der Cursor zeigt   │
└─────────────────────────────┘
                │
          ◇ IN-Taste ◇ ──ja──┐
          ◇ gedrückt ◇        │
                │             ◇ N u. S ◇ ──nein──┐
              nein            ◇ gedrückt ◇        │
                │                  │             ┌──────────────────┐
                │                 ja             │ Einspeichern der  │
                │                  │             │ angezeigten Werte │
                │          ◇ Kartennummer ◇ ─ja─ │ als neue Karte    │
                │          ◇   = 00       ◇      └──────────────────┘
                │                  │             ┌──────────────────┐
                │                nein            │ Zur Kontrolle neue│
                │         ┌──────────────┐       │ Karte nach Anzeige│
                │         │ Lösche ange- │ ┌──────────────┐
                │         │ zeigte Karte │ │ Lösche alle  │
                │         └──────────────┘ │   Karten     │
                │                  │        └──────────────┘
         ┌──────────────┐  ┌──────────────┐
         │ Einlesen Koor-│  │ --nach Karten-│
         │ dinaten-Tasten│  │   Nummer      │
         └──────────────┘  └──────────────┘
                │          ┌──────────────┐
                │          │ Cursor auf   │
                │          │ Linksanschlag│
                │          └──────────────┘
          ◇ Eine    ◇
          ◇ Taste   ◇ ──nein──────────────────────────┐
          ◇ gedrückt◇                                  │
                │ ja                                    │
          ◇ N oder S ◇ ──ja──┐                          │
          ◇ gedrückt ◇        │                          │
                │           ◇ N u. S ◇ ──ja──────────── i │
              nein          ◇ gedrückt◇                   │
                │                │                        │
          ◇ West  ◇            nein                       │
          ◇ gedrückt◇ ─ja─┐      │                        │
                │    ┌──────────┐◇ N      ◇ ──ja──┐        │
              nein   │Cursor 1 Pos│gedrückt◇       │        │
          g │        │nach links │      │     ┌──────────┐  │
                │    └──────────┘    nein     │Anzeigewert│ │
          ◇ Ost   ◇                  │       │  +1       │ │
          ◇ gedrückt◇ ─ja─┐          │       └──────────┘  │
                │    ┌──────────┐◇ S      ◇ ─ja─┐          j│
              nein   │Cursor1 Pos│gedrückt◇      │
          h │        │nach rechts│     │    ┌──────────┐
                │    └──────────┘   nein    │Anzeigewert│
                                            │  -1       │
                                            └──────────┘
```